**Europäisches Patentamt**

**European Patent Office**

**Office européen des brevets**

(19)

(11) Numéro de publication: **0 170 599**
**B1**

(12) **FASCICULE DE BREVET EUROPEEN**

(45) Date de publication du fascicule du brevet: **04.04.90**

(51) Int. Cl.⁵: **F 16 D 7/04, F 16 D 1/08**

(21) Numéro de dépôt: **85420141.5**

(22) Date de dépôt: **25.07.85**

(54) **Limiteur de couple.**

(30) Priorité: **26.07.84 FR 8412105**

(43) Date de publication de la demande:
**05.02.86 Bulletin 86/06**

(45) Mention de la délivrance du brevet:
**04.04.90 Bulletin 90/14**

(84) Etats contractants désignés:
**AT BE CH DE FR GB IT LI LU NL SE**

(56) Documents cités:
**FR-A- 652 278**
**FR-A- 706 290**
**FR-A-1 131 519**
**FR-A-1 198 302**
**FR-E- 39 536**
**GB-A- 881 560**
**GB-A-1 447 483**
**US-A-1 669 225**
**US-A-2 551 718**
**US-A-3 303 913**
**US-A-3 682 505**

(73) Titulaire: **Maure, Christian**
**Ma Chaumière**
**F-01320 Chalamont (FR)**

(72) Inventeur: **Maure, Christian**
**Ma Chaumière**
**F-01320 Chalamont (FR)**

(74) Mandataire: **Maureau, Pierre et al**
**Cabinet GERMAIN & MAUREAU Le Britannia -**
**Tour C 20, Boulevard E. Déruelle**
**F-69003 Lyon (FR)**

Courier Press, Leamington Spa, England.

EP 0 170 599 B1

## Description

La présente invention concerne un limiteur de couple, c'est-à-dire un dispositif d'accouplement entre deux éléments, tels que des arbres menant et mené, qui est apte à désolidariser automatiquement les deux éléments en cas d'augmentation brutale du couple résistant due à un blocage, coincement, choc ou similaire sur l'élément mené comme décrit dans le première partie de la revendication 1.

Dans la plupart des dispositifs de ce type, l'entraînement de l'élément mené s'effectue uniquement par adhérence à l'aide de garnitures de friction portées par ces deux éléments et le désaccouplement se produit par glissement entre ces garnitures de friction lorsque le couple résistant sur l'élément mené est trop élevé. Cependant, dans ces dispositifs à garnitures de friction, l'utilisateur ne s'aperçoit pas toujours du glissement, du fait que le déclenchement de celui-ci n'est pas franc et les garnitures s'usent donc très rapidement.

En outre, en cas d'utilisation sur du matériel agricole, les intempéries, projections de terre et de poussières sur les garnitures de friction provoquent le collage de celles-ci sur les disques de pressions ainsi que l'oxydation de ces deniers, d'où une détérioration du limiteur de couple.

Dans d'autres dispositifs, l'entraînement de l'élément mené s'effectue par verrouillage au moyen d'une goupille calibrée qui est cisaillée lorsque le couple résistant devient supérieur au couple maximum admissible. Une intervention manuelle de l'utilisateur est alors nécessaire pour remplacer la goupille cassée, après chaque rupture de celle-ci, ou après un certain nombre de ruptures dans le cas d'un limiteur à chevilles multiples.

Dans encore d'autres dispositifs, comme celui montré, par exemple, par le FR—A—1 198302, l'accouplement entre les parties menante et menée est réalisé au moyen d'organes d'entraînement déplaçables radialement sous l'action de la force centrifuge, et cet accouplement dépend donc de la vitesse de rotation.

On peut citer également de brevet FR—706 290 (Montgrand) qui décrit une machine capable d'équilibrer automatiquement à tout instant un couple moteur et son couple résistant au moyen de patins montés rotatifs sollicités radialement vers l'extérieur par des ressorts et s'engageant dans des cames intérieures d'une couronne solidaire de l'arbre menant. Ce dispositif ne permet pas un déclenchement du couple résistant; il est seulement constaté une diminution de la vitesse de rotation de l'arbre mené. De plus, ce dispositif fonctionne, en partie avec la force centrifuge; cet accouplement dépend donc de la vitesse de rotation.

L'objet de la présente invention est de remédier à ces inconvénients et de fournir un limiteur de couple pour l'accouplement de deux éléments menant et mené qui soit apte à se réaccoupler automatiquement après un désaccouplement, avec ou sans possibilité de réarmement manuel, et qui fonctionne indépendamment de la vitesse.

Ce but est atteint par les caractéristique de le deuxième partir de le revendication 1.

Ces organes complémentaires peuvent être formés par des éléments faisant saillie à l'intérieur de l'élément menant et/ou montés déplaçables radialement. Ces éléments seront, de préférence, formés par des éléments élastiques tels que des ressorts de façon à absorber une surcharge momentanée sur l'élément mené.

Un système de roue libre et de réarmement manuel peut également être prévu sur le limiteur de couple.

De toute façon, l'invention sera bien comprise et d'autres caractéristiques seront mises en évidence à l'aide de la description qui suit en référence au dessin schématique annexé illustrant à titre d'exemples non limitatifs deux formes de réalisation préférées, de ce limiteur de couple:

Figure 1 est une vue de face en coupe selon I—I de figure 2 du limiteur de couple selon une première forme de réalisation;

Figure 2 est une vue en coupe selon II—II de figure 1;

Figure 3 est une vue de face avec coupe partielle du limiteur de couple selon une seconde forme de réalisation;

Figure 4 est une vue en coupe selon IV—IV de figure 3;

Figure 5 est une vue en coupe du moyeu et du manchon d'assemblage;

Figures 6 à 8 sont des vues de détail montrant différentes positions d'accouplement et de désaccouplement du limiteur de couple des figures 4 et 5.

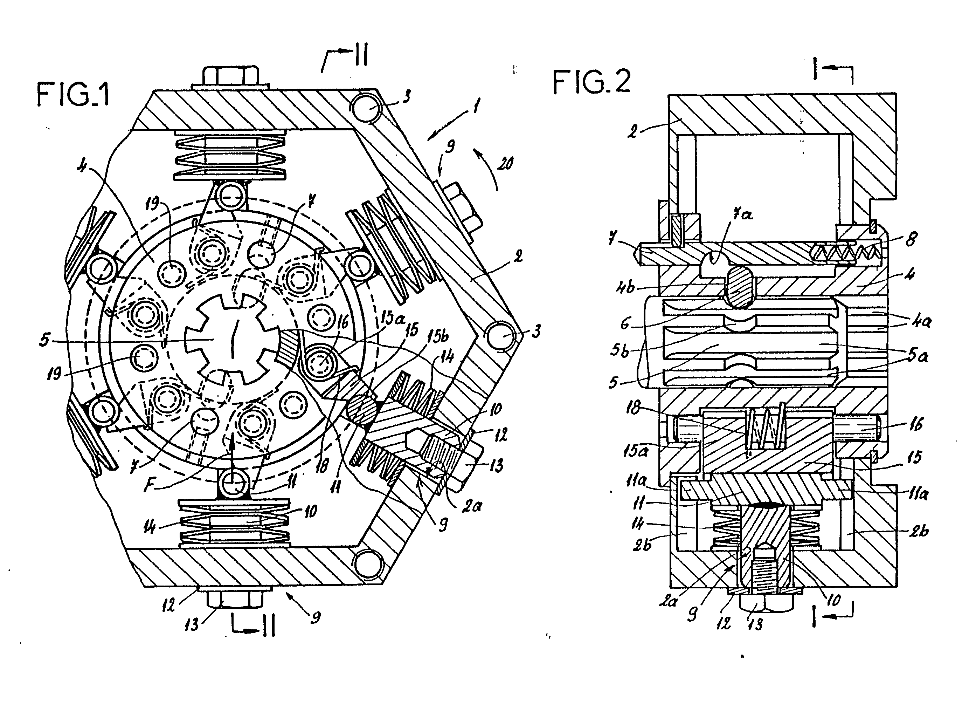

Une première forme de réalisation du limiteur de couple selon l'invention est montrée sur les figures 1 et 2.

Ce limiteur de couple (1) est formée essentiellement d'un boîtier (2), qui est apte à être fixé au moyen de vis placées dans des trous (3) répartis régulièrement sur sa périphérie, sur un flasque ou similaire d'un arbre moteur (non représenté sur le dessin) tournant dans le sens de la flèche (20), et d'un moyeu (4) disposé coaxialement à l'intérieur de ce boîtier (2).

Ce moyeu (4) est monté sur l'arbre mené (5) de la transmission, la liaison en rotation de ces deux éléments (4, 5) étant assurée par des cannelures complémentaires (4a, 5a) prévues respectivement à l'intérieur du moyeu (4) et sur la périphérie de l'arbre (5).

Le verrouillage axial du moyeu (4) et de l'arbre (5) est assuré à l'aide d'un dispositif de verrouillage rapide de type connu en soi formé par deux axes (6) logés dans des perçages radiaux (4b) du moyeu, chacun de ces axes (6) étant aptés à être repoussé par un verrou associé (7) dans une gorge périphérique (5b) ménagée sur l'arbre (5) de façon à assurer le verrouillage axial du moyeu (4) par rapport à l'arbre (5).

Le déverrouillage de l'ensemble est assuré en repoussant les verrous (7) à l'encontre des ressorts (8) à l'action desquels ils sont soumis, jusqu'à ce que leurs évidements (7a) soit en face des perçages (4b) associés de façon à permettre l'escamotage des axes (6) dans les perçages (4b) et les évidements (7a).

Des coulisseaux (9) (six coulisseaux dans l'exemple du dessin) sont montés déplaçables radialement à l'intérieur du boîtier (2). Chaque coulisseau (9) comprend une partie cylindrique (10), montée coulissante dans un alésage radial associé (2a) ménagé dans la paroi du boîtier (2), et une partie également cylindrique (11) s'étendant perpendiculairement à la partie (10) à une extrémité de celle-ci et dans la direction axiale.

Cette partie (11) de chaque coulisseau (9) est apte à coulisser par chacune de ses extrémités (11a) dans des rainures radiales (2b) ménagées sur les faces internes du boîtier (2) lors du déplacement radial de la partie cylindrique (10) de ce même coulisseau.

Ce déplacement radial de chaque coulisseau (9) à l'intérieur du boîtier (2) est limité par une rondelle (12) montée autour de sa partie (10) à l'extérieur du boîtier (2) et retenue sur le coulisseau (9) au moyen d'une vis (13), l'ensemble rondelle (12)-vis (13) assurant en même temps la liaison entre chaque coulisseau (9) et le boîtier (2).

Des ressorts (14) de type rondelle Belleville ou similaire sont intercalés entre le boîtier (2) et la partie (11) de chaque coulisseau (9) et sollicitent celui-ci radialement vers l'intérieur.

Un entraîneur (15) solidaire du moyeu (4) est associé à chaque coulisseau (9). Chaque entraîneur (15) est monté rotatif à une de ses extrémités (15a) sur un axe (16) fixé à l'intérieur du moyeu, chaque axe (16) s'étendant parallèlement à l'axe du moyeu (4) et du boîtier (2).

L'autre extrémité (15b) de chacun de ces entraîneurs (15) présente une forme arrondie en arc de cercle complémentaire de la partie cylindrique (11) du coulisseau (9) associé, et qui este apte à venir en contact avec cette partie (11) du coulisseau (9) pour réaliser l'entraînement du moyeu (4) par le boîtier (2).

Ainsi que le montre la figure 1, chacun des entraîneurs (15) est conformé de telle sorte que son axe de rotation (16) soit départé latéralement par rapport à la ligne d'application de l'effort radial F exercé sur celui-ci par le coulisseau associé (9) sous l'effet des ressorts (14).

Chaque entraîneur (15) est, en outre, muni d'un ressort de rappel (18) tendant à le ramener dans sa position de réaccouplement, c'est-à-dire dans sa position montrée à la figure 1, une fois qu'il en a été écarté.

Une butée est associée à chaque entraîneur (15). Chaque butée est formée d'un axe (19) similaire aux axes (16) et monté à l'intérieur du boîtier, ou par un verrou (7). Ces butées sont destinées à arrêter le mouvement de l'entraîneur (15) lors de son retour sous l'effet du ressort de rappel (18).

Au repos, les coulisseaux (9) sont repoussés radialement vers l'intérieur par les ressorts (14) et sont en appui contre les entraîneurs (15). On peut noter ici que les ressorts (14) ne sont pratiquement pas sollicités et sont seulement légèrement comprimés de façon à éliminer tout jeu.

En cours de fonctionnement et dans les conditions normales d'utilisation, le boîtier (2) tourne dans le sens de la flèche (20) et chaque coulisseau (9) est soumis, d'une part, à un couple d'entraînement et, d'autre part, à une force centripète F produite par les ressorts (14). Cette force centripète F est dirigée radialement et selon une ligne de force passant par le centre de la partie (11) du coulisseau, comme montré à la figure 1. La ligne d'action de cette force est donc déportée latéralement par rapport à l'axe de rotation de l'entraîneur (15) associé et il en résulte sur cet entraîneur un couple résistant de sens opposé au couple d'entraînement induit par le boîtier (2).

A ce couple résistant s'ajoutent un couple résistant dû aux ressorts (18) et éventuellement un couple résistant sur l'arbre du moyeu (4) également de même sens, la somme de ces différents couples donnant lieu à un couple résistant global $C_R$ qui tend à faire pivoter l'entraîneur (15) dans le sens opposé à celui de la rotation du boîtier (2) et permet donc de réaliser l'accouplement des entraîneurs (15) et des coulisseaux (9) et, par conséquent, l'entraînement du moyeu (4) par le boîtier (2), cet accouplement étant réalisé lorsque le couple d'entraînement $C_E$ sur le boîtier (2) et le couple résistant global $C_R$ sur le moyeu (4) ont des valeurs équivalentes.

Lorsque le couple résistant sur l'arbre (5) augmente du fait d'une surcharge de celui-ci due par exemple à un choc, le couple résistant global $C_R$ sur les entraîneurs (15) augmente et le boîtier (2) se déplace par rapport au moyeu (4) dans le sens de rotation de la flèche (20), ce qui provoque une rotation des entraîneurs (15) sur leur axe (16) et un déplacement radial des coulisseaux associés (9) vers l'extérieur avec compression des rondelles élastiques (14). Cette compression des rondelles permet d'absorber temporairement la surcharge et si celle-ci est assez faible et ne dure pas trop longtemps, le dispositif peut ensuite retourner dans sa position initiale sans rupture de l'accouplement.

Si, au contraire, la surcharge continue et augmente encore, le boîtier continue sa rotation par rapport au moyeu (4).

Lorsque le boîtier (2) dépasse la position dans laquelle l'axe (16) des entraîneurs (15) est aligné sur la ligne d'action de la force F induite par les ressorts (14), le couple résultant de cette force F change de sens et ne s'oppose plus au couple d'entraînement $C_E$ et contribue donc à faire pivoter les entraîneurs (15) dans le sens de la flèche (20), ce qui provoque le désaccouplement de l'ensemble boîtier (2)-moyeu (4).

Le réaccouplement s'effectue automatiquement par l'arrêt de la rotation du boîtier (2), ce qui permet aux entraîneurs (15) de revenir en butée contre les axes (7, 19) sous l'effet de leurs ressorts de rappel (18) associés.

On peut noter que ce dispositif de limiteur de couple fonctionne de façon progressive et permet notamment d'absorber certaines surcharges ne dépassant pas une valeur prédéterminée du couple avant qu'il y ait désaccouplement, grâce aux ressorts (14).

Ce dispositif est, en outre, entièrement automatique et ne nécessite aucun réarmement manuel de l'utilisateur puisqu'il suffit, en effet, d'arrêter le boîtier pour que le dispositif se réaccouple automatiquement.

On peut également noter que ce dispositif fonctionne indépendamment de la vitesse de rotation, puisqu'il n'utilise pas l'action de la force centrifuge, et qu'il ne présente pratiquement aucune contrainte interne au repos, puisque les ressorts (14) sont pratiquement détendus dans cette position.

En outre, lorsqu'il y a désaccouplement entre le boîtier (2) et le moyeu (4), les coulisseaux (9), qui sont repoussés radialement vers l'intérieur par les ressorts (14) et qui poursuivent leur rotation, entrent en contact avec les entraîneurs (15), qui sont eux en butée contre les axes (19, 7) sous l'effet de leurs ressorts de rappel (18), de sorte qu'il se produit un cliquetis avertissant l'utilisateur du désaccouplement du dispositif et permettant à celui-ci d'arrêter ce dernier pour réaliser le réaccouplement.

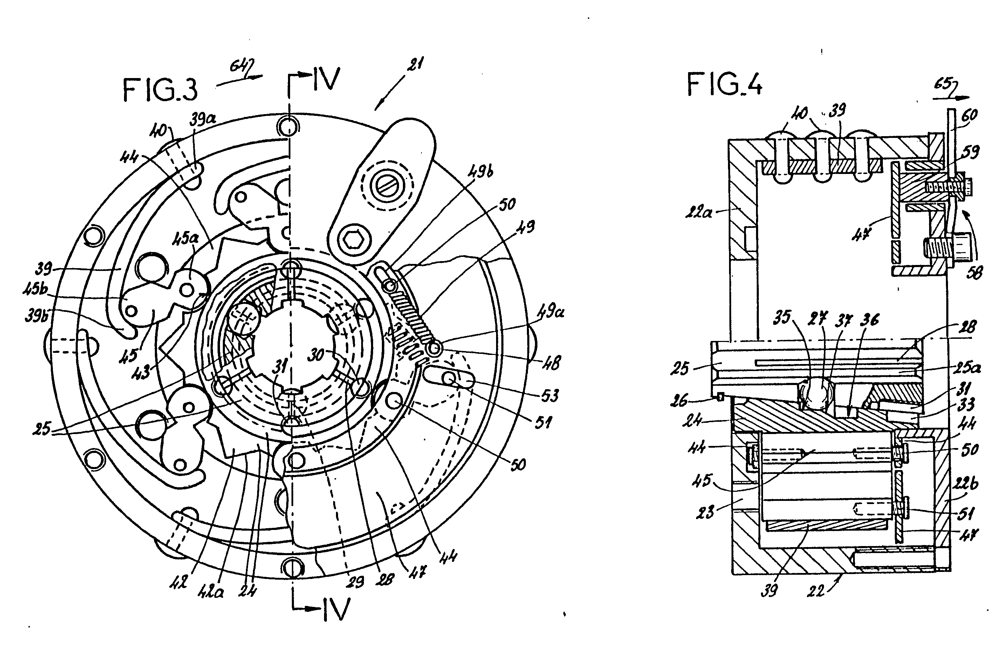

Le limiteur de couple (21) montré sur les figures 3 à 8 fonctionne selon le même principe que le limiteur de couple (1) précédemment décrit.

De même que celui-ci, il comprend un boîtier (22), rendu solidaire de l'arbre de transmission de la partie menante à l'aide de vis placées dans des trous (23) du boîtier et vissées dans un flasque ou similaire de cet arbre, et un moyeu (24) disposé coaxialement à l'intérieur de ce boîtier (22) et lié en translation et en rotation à l'arbre mené de la transmission.

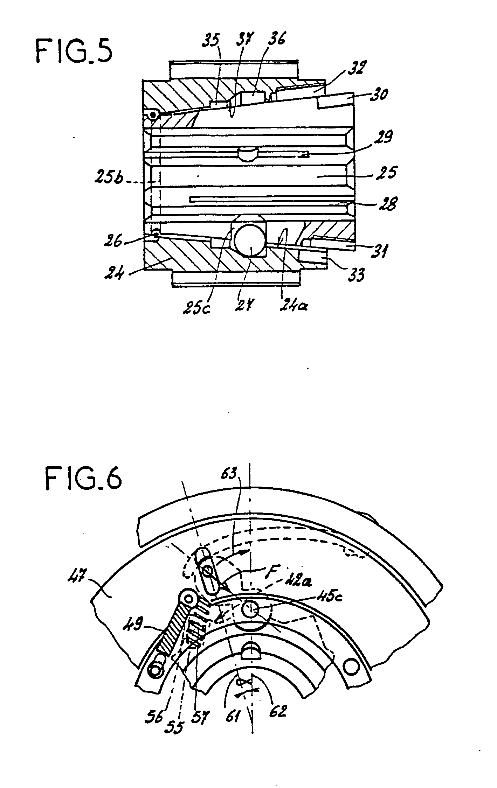

Dans ce cas, la liaison entre le moyeu (24) et l'arbre mené de la transmission, qui n'est pas représenté sur la figure 5 pour plus de clarté, mais qui est similaire à l'arbre (5) des figures 1 à 2, est réalisée par l'intermédiaire d'un manchon d'assemblage (25) interchangeable et permettant de réaliser la liaison du moyeu (24) avec n'importe quel profil d'arbre (5).

Ainsi que le montre notamment la figure 4, le manchon (25) a extérieurement une forme conique et présente intérieurement un alésage cylindrique muni de cannelures (25a) complémentaires de cannelures (5a) de l'arbre (5).

Les cannelures (25a) formant un creux du manchon (25) sont fendues, par exemple par sciage, sur à peu près les trois-quarts de leur longueur, alternativement à partir d'une extrémité et de l'autre du manchon (25) de façon à former des fentes (28, 29) (six fentes dans l'exemple du dessin) s'étendant alternativement et respectivement à partir de d'extrémité de plus grand diamètre et de l'extrémité de plus petit diamètre du manchon.

Le manchon (25) est muni extérieurement à son extrémité en bout de plus petit diamètre d'une gorge périphérique (25b) apte à recevoir un jonc d'arrêt (26). Il présente également à peu près au milieu trois perçages (25c), ménagés radialement et aptes à recevoir chacun une bille (27).

Enfin le manchon (25) est muni sur sa périphérie, du côté de son extrémité de plus grand diamètre de demi-trous axiaux (30, 31) alternativement lisses (30) et filetés (31), chaque demi-trou étant ménagé au droit d'un creux de cannelure (25a).

Le moyeu (24) présente intérieurement un alésage conique (24a). Il présente également, de même que le manchon (25), des demi-trous axiaux ménagés à son extrémité en bout de diamètre le plus grand, alternativement filetés (32) et lisses (33), ces demi-trous débouchant dans sa paroi intérieure et présentant le même diamètre que les demi-trous (30, 31) du manchon et étant aptes à coopérer avec les demi-trous respectivement lisses (30) et filetés (31) de ce manchon (25) pour recevoir des vis non représentées sur le dessin.

Les longueurs des demi-trous lisses respectivement (30, 33) sont inférieures à celles des demi-trous filetés associés respectivement (32, 31) pour une raison qui sera expliquée plus loin.

Deux gorges circulaires (35, 36) sont ménagées dans l'alésage conique du moyeu (24) à peu près au milieu de celui-ci. La gorge (36) est située du côté de l'extrémité du moyeu de plus grand diamètre et a un diamètre supérieur à celui de la gorge (35).

Ces deux gorges (35, 36) sont aptes à recevoir les billes (27) suivant la position du moyeu (24) par rapport au manchon (25) et sont séparées l'une de l'autre par une rampe (37) facilitant le passage de ces billes d'une gorge à l'autre.

Le montage de l'arbre (5) dans le moyeu (24) à l'aide du manchon (25) est réalisé de la façon suivante:

Tout d'abord le manchon (25), muni des billes (27) logées dans les perçages (25c), est monté dans le moyeu (24), dans la position montrée à la figure 5, dans laquelle les billes (27) portent contre la gorge (36) et le jonc d'arrêt (26) est mis en place dans sa gorge (25b) de façon à empêcher tout désemboîtement du moyeu (24) et du manchon (25).

L'ensemble est ensuite glisé sur l'arbre (5) jusqu'à ce que les billes (27) descendent le long de la rampe (37) et viennent en appui contre le fond de la gorge (35) comme montré sur la figure 5, où elles sont alors emprisonnées chacune dans un logement formé par un perçage (25c) du manchon (25) et la gorge (35) du moyeu (24).

Le verrouillage du moyeu (24) du manchon (25) et de l'arbre (5) est alors effectué en montant des vis de serrage à la fois dans les demi-trous taraudés (32) du moyeu (24) et dans les demi-trous lisses (30) du manchon (25) coïncidant avec ceux-ci et en les vissant fortement.

Le vissage de ces vis provoque alors un glissement du manchon (25) par rapport au moyeu (24), de la droite vers la gauche dans la figure 5, (du fait que les vis, lors de leur vissage, prennent apui contre le fond des demi-trous (30) plus courts), et, par conséquent, une réduction du diamètre intérieur du manchon (25) qui vient alors serrer parfaitement le profil de l'arbre cannelé, (réduction qui est rendue possible par les fentes (28, 29) ménagées dans celui-ci), ainsi qu'un emprisonnement des billes (27) entre la gorge (35) du moyeu (24) et celle (5b) de l'arbre (5).

On obtient ainsi un montage du moyeu (24) sur l'arbre avec verrouillage en rotation et en translation axiale, et sans jeu axial ni radial entre ceux-ci.

Grâce à ce dispositif de montage, le moyeu (24) peut être adapté sur n'importe quel profil d'arbre (5); il suffit, en effet, pour cela de changer le manchon (25) par un autre manchon dont le profil intérieur est adapté à celui de l'arbre.

Le démontage de l'ensemble est réalisé très facilement; il suffiet, en effet, d'enlever les vis de serrage des trous (30, 32) dans lesquels elles étaient logées, et de les placer dans les demi-trous taraudés (31) du manchon (25) et dans les demi-trous lisses (33) du moyeu (24) et de les visser.

Lors de ce vissage, les vis viennent prendre appui contre le fond des trous (33) plus courts que les trous (31) et permettent d'extraire le manchon (24) par rapport au moyeu, jusqu'à ce que les billes (27) soient libérées et se retrouvent dans leur position montrée à la figure 5. L'ensemble moyeu (24)-manchon (25) peut alors être retiré de l'arbre de la machine menée et le moyeu (24) être désaccouplé du manchon (25) par retrait du jonc d'arrêt (26).

Le boîtier (22) a sensiblement la forme d'une cuvette cylindrique (22a) fermée par un couvercle (22b) et est entraîné par l'arbre menant de la transmission dans le sens horaire.

Sur la paroi cylindrique intérieure du boîtier (22) sont placés des ressorts plats (39) (six ressorts plats dans l'exemple du dessin).

Chaque ressort (39) est fixé par une extrémité (39a) sur le boîtier (22) au moyen de rivets (40) et son autre extrémité 39b est recourbée vers l'intérieur.

Un entraîneur (45) est associé à chaque ressort (39). Chaque entraîneur (45) est, de même que les entraîneurs (15) du dispositif précédemment décrit, monté rotatif sur le moyeu (24).

Ainsi que l montre la figure 3, le moyeu (24) a une forme étoilée et présente six crêtes (42) de forme triangulaire, réparties régulièrement sur sa périphérie, et séparées les unes des autres par des évidements semi-circulaires (43), chaque évidement (43) étant apte à recevoir une extrémité de forme complémentaire (45a) d'un entraîneur (45) et les faces (42a) de chaque crête (42) étant aptes à servir de butée pour un entraîneur associé (45) lors de l'escamotage de celui-ci.

Les entraîneurs (45) sont donc logés par une extrémité (45a) à l'intérieur des évidements (43) du moyeu (24) et sont, en outre, reliés ensemble par cette même extrémité au moyen de deux rondelles de maintien (44) sur lesquelles ils sont fixés par des vis (50) et qui sont placées de part et d'autre de chaque entraîneur (45) en direction axiale comme montré à la figure 4.

Ces rondelles (44) assurent le maintien des entraîneurs (45) dans les logements (43) et, par conséquent, leur liaison au moyeu (24) tout en autorisant leur rotation par rapport à un axe de rotation fictif (45c) formé par le centre de courbure de ces évidements (43).

Une des rondelles (44), celle située du côté du couvercle (22a) du boîtier (22) est liée à une rondelle d'entraînement (47) s'étendant extérieurement à cette rondelle (44) par un ressort de traction (49).

Ainsi que le montre la figure 4, ce ressort (49) est fixé, par une extrémité (49a), sur un téton (48) solidaire de la rondelle (47), et par son autre extrémité en forme de boucle allongée (49b), sur la vis de fixation (50) d'un des entraîneurs (45) sur la rondelle (44) située du même côté. La rondelle d'entraînement (47) est quant à elle fixée sur l'extrémité (45b) de chaque entraîneur au moyen de vis (51).

Des lumières radiales (53) sont, en outre, prévues sur la rondelle (47) pour permettre le coulissement radial des vis de fixation (51) des entraîneurs (45), lors du pivotement de cette rondelle d'entraînement (47).

Sur le moyeu (24) est ménagé ou trou taraudé (55), ce trou taraudé débouche par un lamage (56) de plus grand diamètre, dans la face de butée (42a) d'une des crêtes (42) et s'étend sensiblement perpendiculairement à celle-ci.

Un ressort de roue libre (57), dont le rôle sera expliqué plus loin, est logé dans ce trou (55).

Sur le couvercle (22b) du boîtier (22) est, en outre, prévu un système de sécurité supplémentaire (58).

Ainsi que le montre la figure 4, ce système (58) est formé par un patin de freinage (59) monté coulissant axialement dans le couvercle (22b) du boîtier (2) et pressé axialement contre la rondelle d'entraînement (47) par un ressort à lame (60) monté sur ce même couvercle (22b).

Ce limiteur de couple fonctionne de la façon suivante:

En position de repos, le ressort (49) sollicite la rondelle d'entraînement (47) dans le sens antihoraire et le fait pivoter dans ce même sens autour de la rondelle (44) à laquelle elle est liée, ce qui a pour effet de faire pivoter les entraîneurs (45) également dans le sens antihoraire autour de leurs axes de rotation fictifs (45c), par l'intermédiaire des vis (51) coulissant dans les lumières associées (53) de la rondelle (47).

Lorsque le ressort (49) est complètement rétracté, les entraîneurs (45) se trouvent en contact avec l'extrémité du ressort (57) logé dans son trou (55) et s'immobilisent dans cette position.

Lorsque le boîtier est mis en marche par rotation de l'arbre menant et commence à tourner dans le sens horaire, comme indiqué par la flèche (64), les ressorts plas (39) fixés sur celui-ci viennent en contact avec les extrémités (45b) des entraîneurs (45).

Ainsi qu'il l'a déjà été expliqué pour le limiteur de couple précédemment décrit, chaque ressort plat (39) exerce alors sur l'entraîneur associé (45) une force de compression centripète F, dirigée sensiblement radialement selon une ligne de force (61) déportée latéralement (angle sur la figure 6) par rapport au rayon (62) passant par le centre de rotation (45c) de cet entraîneur. Cette force F induit donc sur l'entraîneur associé (45) un couple de sens opposé au couple d'entraînement $C_E$ et qui tend donc à faire pivoter cet entraîneur vers la gauche sur la figure 6.

Il en résulte donc un équilibre entre le couple d'entraînement et le couple résistant sur chaque entraîneur (45), ce qui permet l'entraînement du moyeu par l'intermédiaire des entraîneurs (45) en butée contre les ressorts (39).

Si le couple résistant sur l'arbre mené augmente, le boîtier (22) pivote par rapport au moyeu (24), les entraîneurs (45) se déplaçant légèrement sur la droite, comme montré à la figure 6 par la flèche (63) par rotation autour de leur axe (45c), et, de même que dans l'exemple précédent, les ressorts (39) s'escamotent en se déplaçant radialement vers l'extérieur sous la poussée radiale des entraîneurs (45) provoquée par le déplacement de ceux-ci, et absorbent momentanément la surcharge.

Si la surcharge n'est que momentanée, l'ensemble du mécanisme reprend sa position initiale dès l'arrêt de celle-ci sous l'effet des ressorts plats (39).

Par contre, si cette surcharge persiste et que le boîtier (22) tourne jusqu'à ce que la ligne de force (61) soit confondue avec la ligne (62) passant par le centre de rotation (45c) des entraîneurs (45), plus aucun couple résistant ne s'oppose à la rotation de ces entraîneurs dans le sens horaire, puisque le couple induit par les ressorts (39) a alors le même sens que le couple d'entraînement $C_E$ et l'accouplement est alors rompu.

De même que précédemment, le boîtier (22) poursuit sa rotation indépendamment du moyeu (24) et le contact des ressorts (39) avec les entraîneurs (45) crée un bruit de cliquetis avertissant l'utilisateur du désaccouplement.

Pendant le désaccouplement, les ressorts (39) font pivoter les entraîneurs (45) dans le sens horaire, jusqu'à ce que chacune de ceux-ci vienne s'immobiliser contre une face de butée (42a) associée du moyeu (24).

Le dispositif de freinage de sécurité (58) immobilise alors la rondelle d'entraînement (47) et les entraîneurs (45) de désaccouplement, par le biais du patin de freinage (59) pressé contre cette rondelle (47) par le ressort (60), jusqu'à ce que le boîtier soit arrêté.

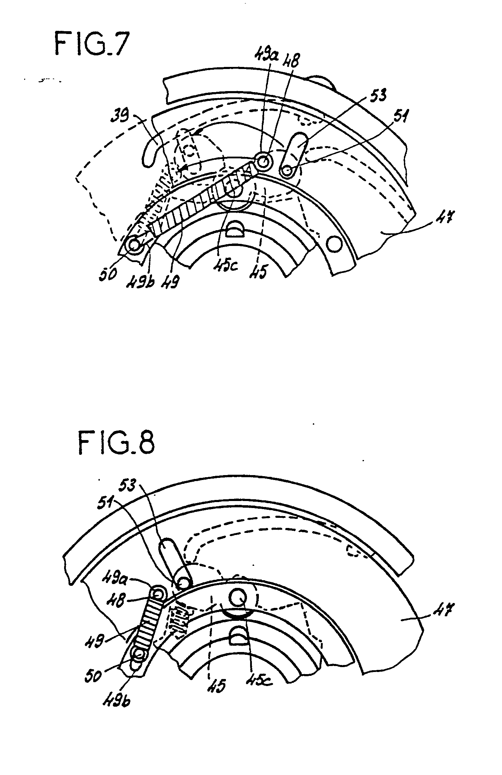

Pour réarmer le dispositif, l'utilisateur doit soulever manuellement le patin de freinage (59) en soulevant le ressort (60) dans le sens de la flèche (65) pour libérer la rondelle (47) qui reviendra alors sous l'effet du ressort (49), de même que les entraîneurs (45), dans la position de réarmement montrée en pointillés à la figure 7 et il suffira alors de remettre le boîtier (22) en marche pour réaliser à nouveau l'accouplement, celui-ci s'effectuant automatiquement.

Ce dispositif de freinage (58) permet donc une sécurité supplémentaire puisqu'il n'autorise le réarmement du limiteur de couple qu'une fois que le boîtier (22) a été arrêté.

Si, en cours d'accouplement, l'utilisateur arrête la rotation du boîtier (22), celui-ci s'immobilise; le moyeu (24) poursuit cependant sa rotation dans le même sens horaire sous l'effet de l'inertie, les entraîneurs (45) pivotant dans le sens anti-horaire sous l'effet du ressort (49). Ces entraîneurs (45) s'effacent alors complètement jusqu'à venir en butée contre les faces (42a) des crêtes (42) et en comprimant le ressort (57) plus faible que le ressort (49), sous l'effet des ressorts plats (39) qui les repoussent radialement vers l'intérieur par leur extrémité (39b), ce mouvement étant permis par une rotation de la rondelle (47) dans le sens anti-horaire.

A ce moment, le ressort (49) n'intervient plus et le moyeu (24) peut continuer sa rotation en roue libre par rapport au boîtier (22) dans endommager celui-ci.

C'est ainsi que, par exemple, la position relative des éléments menés et menants pourrait être inversée, le moyeu devenant alors l'élément menant et le boîtier l'élément mené.

De même, des saillies ou des évidements pourraient être prévus, à la place des coulisseaux ou des ressorts du boîtier, pour coopérer avec les entraîneurs du moyeu, sans que l'on sorte pour autant du cadre de la présente invention.

**Revendications**

1. Limiteur de couple à désaccouplement et réaccouplement automatique entre un élément menant (2, 22) et un élément mené (4, 24) dans lequel sont compris des organes complémentaires montés sur l'élément menant et associés à des organes d'entraînement (15, 45) montés rotatifs sur l'élément mené (4, 24) et dont chacun sollicité par des moyens de rappel élastique tendant à le ramener dans une position d'accouplement avec un organe complémentaire associé et est apte à s'escamoter par rotation lorsque le couple résistant ($C_R$) sur l'élément mené (4, 24) atteint une valeur prédéterminée, dans lequel chacun des organes complémentaires est apte à entrer en prise avec l'organe d'entraînement associé pour réaliser l'accouplement entre les éléments menant et mené, et dans lequel l'élément menant est constitué par un boîtier (2, 22) et l'élément mené par un moyeu (4,24) monté rotatif à l'intérieur de ce boîtier (2, 22) coaxialement, à celui-ci, caractérisé en ce que les organes complémentaires sont formés par des éléments (9, 39) élastiques faisant saillie à l'intérieur du boîtier (2, 22) en ce qu'en position d'accouplement l'axe de rotation de chaque organe d'entraînement est deporte lateralement par rapport à la ligne qui joint G centre de la surface du contact outre les organes d'entraînement (15, 45) et les organes complémentaires associés, respectivement (9, 39) de façon à créer sur chacun de ces organes d'entraînement (15, 45) un couple résistant opposé au couple d'entraînement, et en ce qu'en position d'accouplement, après passage par chaque organe complémentaire (9, 39) de la position dans laquelle l'axe de rotation de l'organe d'entraînement associé (15, 45) est aligné avec la ligne susdite le couple résistant de l'organe d'entraînement associé induit par l'organe complémentaire (9, 39) étant dans le même sens que le couple d'entraînement, de manière à provoquer le désaccouplement de l'ensemble boîtier (2, 22)-moyeu (4, 24).

2. Limiteur de couple selon la revendication 1, caractérisé en ce que les organes complémentaires (9, 39) sont des éléments élastiques en saillie à l'intérieur de l'élément menant aptes à se comprimer radialement vers l'extérieur, à l'intérieur du boîtier (2, 22) afin d'absorber une surcharge temporaire sur l'élément mené (4, 24).

3. Limiteur de couple selon l'une des revendications 1 ou 2, caractérisé en ce que chaque organe d'entraînement (15) est sollicité par un ressort de rappel (18) du type hélicoïdal enroulé autour de l'axe de rotation de l'organe d'entraînement (15) tendant à le ramener dans une position d'accouplement avec un organe complémentaire associé (9).

4. Limiteur de couple selon la revendication 3, caractérisé en ce que chaque organe complémentaire est formé par un coulisseau (11) déplaçable radialement à l'intérieur du boîtier (2) et sollicité radialement à l'intérieur de celui-ci par au moins un ressort (14) tel qu'une rondelle Belleville.

5. Limiteur de couple selon l'une des revendications 1 ou 2, caractérisé en ce que les organes d'entraînement (45) sont réunis ensemble à l'aide d'au moins une rondelle (44), et en ce que cette rondelle (44) est reliée par un ressort de rappel (49) à une rondelle d'entraînement (47), sur laquelle chaque organe d'entraînement (45) est monté coulissant radialement.

6. Limiteur de couple selon la revendication 5, caractérisé en ce que chaque organe complémentaire est formé par un ressort à lame (39) fixé sur le boîtier (22) et présentant une extrémité recourbée (39b) apte à coopérer avec un organe d'entraînement (45) associé.

7. Limiteur de couple selon l'une des revendications 5 ou 6, caractérisé en ce qu'un patin de freinage (59) est monté coulissant axialement dans le couvercle (22b) du boîtier (22) et en ce que ce patin (59) est pressé axialement contre la rondelle d'entraînement (47) par un ressort à lame (60) monté sur ce couvercle (22b).

8. Limiteur de couple selon l'une des revendications 5 à 7, caractérisé en ce qu'un ressort de roue libre (57) est logé dans un trou ménagé dans le moyeu (24), en ce que ce ressort (57) exerce sur les organes d'entraînement (45) un effort de sens opposé à celui du ressort de rappel (49) et en ce qu'il est apte à s'escamoter sous l'effect de ce ressort (49) lorsque la rotation du boîtier (22) est arrêtée, de façon à permettre le rotation du moyeu (24) en roue libre.

9. Limiteur de couple selon l'une quelconque des revendications 1 à 8, caractérisé en ce qu'il est prévu un manchon d'assemblage (25) interchangeable entre le moyeu mené (24) et un arbre cannelé (5) mené, en ce que ce manchon (25) présente extérieurement une forme conique complémentaire d'un alésage coinique du moyeu (24) et intérieurement un alésage cylindrique muni de cannelures (25a) complémentaires de celles de l'arbre (5), et en ce que des moyens sont prévus pour assurer le serrage du manchon (25) à l'intérieur du moyeu (24) par coincement conique.

10. Limiteur de couple selon la revendication 9, caractérisé en ce que les moyens de serrage sont formés par des demi-trous axiaux filetés (32) ménagés à l'extrémité en bout de plus grand diamètre du moyeu (24) et par des demi-trous axiaux lisses (30) ménagés dans l'extrémité correspondante du manchon (25), ces demi-trous lisses (30) étant plus courts que les demi-trous filetés (32) et étant aptes à venir en coïncidence avec ceux-pour recevoir des vis de serrage de façon que le serrage de ces vis provoque le déplacement du manchon (25) à l'intérieur du moyeu (24).

11. Limiteur de couple selon l'une des revendications 8 ou 9, caractérisé en ce que pour le desserrage, il est prévu des demi-trous axiaux lisses (33) ménagés à l'extrémité en bout de plus grand diamètre du moyeu (24) et des demi-trous axiaux filetés (31) ménagés dans l'extrémité correspondante du manchon (25), ces demi-trous lisses (33) étant plus courts que les demi-trous filetés (31) et étant aptes à venir en coïncidence avec ceux-ci pour recevoir des vis, le serrage de celles-ci provoquant le déplacement du manchon (25) à l'extérieur du moyeu (24).

12. Limiteur de couple selon l'une des revendications 1 à 11, caractérisé en ce que le manchon (25) est muni de fentes (28, 29) axiales s'étendant alternativement à partir de l'extrémité de plus grand diamètre et de l'extrémité de plus petit diamètre.

**Patentansprüche**

1. Zwischen einem Antriebselement (2, 22) und einem Abtriebselement (4, 24) angeordneten Drehmomentbegrenzer zum automatischen Auskuppeln und Wiedereinkuppeln,

bei dem an dem Antriebselement montierte komplementäre Organe vorgesehen sind, die Mitnehmerorganen (15, 45) zugeordnet sind, die drehbar an dem Abtriebselement (4, 24) montiert und jeweils durch elastische Rückstellmittel belastet sind, die sie in eine Position vorspannen, in der sie jeweils mit einem zugeordneten Exemplar der komplementären Organe gekuppelt sind, wobei die Mitnehmerorgane (15, 45) durch Drehung versenkbar sind, wenn das auf das Abtriebselement (4, 24) einwirkende Gegenmoment ($C_R$) einen vorbestimmten Wert erreicht,

bei dem jedes der komplementären Organe mit dem zugehörigen Mitnehmerorgan in Eingriff treten kann, um zwischen dem Antriebselement und dem Abtriebselement eine Kupplungsverbindung herzustellen,

und bei dem das Antriebselement aus einem Gehäuse (2, 22) und das Abtriebselement aus einer im Inneren dieses Gehäuse (2, 22) drehbar montierten und koaxial zu ihm angeordneten Nabe (4, 24) besteht, dadurch gekennzeichnet,

daß die komplementären Organe von in den Innenraum des Gehäuses (2, 22) ragenden elastischen Elementen (9, 39) gebildet sind,

daß in eingekuppelter Position die Drehachse jedes Mitnehmerorgans gegenüber der Linie, die das Zentrum der Kontaktfläche zwischen den Mitnehmerorganen (15, 45) und die jeweils zugeordneten komplementären Organe (9, 39) verbindet, seitlich versetzt ist, so daß auf jedes Mitnehmerorgan (15, 45) ein dem Antriebsmoment entgegengesetztes Gegenmoment ausgeübt wird,

und daß in eingekuppelter Position nach dem Durchgang der einzelnen komplementären Organe (9, 39) durch die Position, in der die Drehachse des zugehörigen Mitnehmerorgans (15, 45) mit der genannten Linie fluchtet, das von dem komplementären Organ (9, 39) auf das zugehörige Mitnehmerorgan ausgeübte Gegenmoment dieselbe Richtung hat wie das Antriebsmoment, so daß die aus Gehäuse (2, 22) und Nabe (4, 24) bestehende Einheit ausgekuppelt wird.

2. Drehmomentbegrenzer nach Anspruch 1, dadurch gekennzeichnet, daß die komplementären Organe (9, 39) elastische Elemente sind, die ins Innere des Antriebselements ragen und im Innern des Gehäuses (2, 22) in radialer Richtung nach außen komprimierbar sind, um eine zeitweilig auf das Abtriebselement (4, 24) einwirkende Überlast aufzunehmen.

3. Drehmomentbegrenzer nach einem der Ansprüche 1 oder 2, dadurch gekennzeichnet, daß jedes Mitnehmerorgan (15) von einer Rückholfeder (18) vorgespannt ist, die als Schraubenfeder ausgebildet und um die Drehachse des Mitnehmerorgans (15) gewunden ist und das Mitnehmerorgan (15) in eine Position vorspannt, in der es mit dem zugehörigen komplementären Organ (9) gekuppelt ist.

4. Drehmomentbegrenzer nach Anspruch 3, dadurch gekennzeichnet, daß jedes komplementäre Organ von einem Schieber (11) gebildet ist, der im Innern des Gehäuses (2) radial verschiebbar und von wenigstens einer Feder (14), z.B. einer Belleville-Scheibe, radial nach innen vorgespannt ist.

5. Drehmomentbegrenzer nach einem der Ansprüche 1 oder 2, dadurch gekennzeichnet, daß die Mitnehmerorgane (45) durch wenigstens eine Scheibe (44) miteinander verbunden sind, und daß diese Scheibe (44) über eine Rückholfeder (49) mit einer Mitnehmerscheibe (47) verbunden ist, an der jedes Mitnehmerorgan (45) radial gleitbar montiert ist.

6. Drehmomentbegrenzer nach Anspruch 5, dadurch gekennzeichnet, daß jedes komplementäre Organ von einer an dem Mitnehmerscheibe (22) befestigten Flachfeder (39) gebildet ist, die einen gebogenen Endbereich (39b) aufweist, der mit einem zugehörigen Mitnehmerorgan (45) zusammenwirken kann.

7. Drehmomentbegrenzer nach einem der Ansprüche 5 oder 6, dadurch gekennzeichnet, daß ein Bremsschuh (59) in dem Deckelteil (22b) des Gehäuses (22) axial gleitbar montiert ist und daß dieser Bremsschuh (59) von einer an diesem Deckelteil (22b) montierten Blattfeder (60) in axialer Richtung gegen die Mitnehmerscheibe (47) gepreßt wird.

8. Drehmomentbegrenzer nach einem der Ansprüche 5 bis 7, dadurch gekennzeichnet, daß in einer in der Nabe (24) ausgebildeten Bohrung eine Freilauffeder (57) aufgenommen ist, die auf die Mitnehmerorgane (45) eine Kraft ausübt, deren Wirkungsrichtung derjenigen der Rückholfeder (49) entgegensetzt ist, und daß die Freilauffeder (57) durch die Wirkung der Rückholfeder (49) versenkbar ist, wenn die Drehbewegung des Gehäuses (22) angehalten wird, so daß eine Drehung der Nabe (24) im Freilauf erfolgen kann.

9. Drehmomentbegrenzer nach einem der Ansprüche 1 bis 8, dadurch gekennzeichnet, daß zwischen der das Antriebselement bildenden Nabe (24) und einer mit Nuten versehenen Abtriebswelle (5) eine auswechselbare Verbindungsbuchse (25) angeordnet ist, die eine zu einer konischen Bohrung der Nabe (24) komplementäre Außenform und innen eine zylindrische Bohrung besitzt, die mit zu den Nuten der Welle (5) komplementären Nuten (25a) versehen ist, und daß Mittel vorgesehen sind, die das Festklemmen der Buchse (25) im Innern der Nabe (24) durch konisches Verkeilen sicherstellen.

10. Drehmomentbegrenzer nach Anspruch 9, dadurch gekennzeichnet, daß die Mittel zum Festklemmen von axialen Gewindehalbbohrungen (32), die an der durchmessergrößeren Stirnseite der Nabe (24) angebracht, sind, und von glatten axialen Halbbohrungen (30) gebildet sind, die in dem korrespondierenden Endbereich der Buchse (25) angebracht sind, wobei die glatten Halbbohrungen (30) kürzer sind als die Gewindehalbbohrungen (32) und mit diesen zur Deckung gebracht werden können, um Spannschrauben aufzunehmen, deren Anziehen die Verschiebung der Buchse (25) im Innern der Nabe (25) bewirkt.

11. Drehmomentbegrenzer nach einem der Ansprüche 8 oder 9, dadurch gekennzeichnet, daß zum Lösen der Klemmverbindung an der durchmessergrößeren Stirnseite der Nabe .(24) angebrachte glatte axiale Halbbohrungen (33) sowie in dem korrespondierenden Endbereich der Buchse (25) angebrachte Gewindehalbbohrungen (31) vorgesehen sind, wobei die glatten Halbbohrungen (33) kürzer sind als die Gewindehalbbohrungen (31) und mit diesen zur Deckung gebracht werden können, um Schrauben aufzunehmen, deren Anziehen ein Herausziehen der Buchse (25) aus der Nabe (24) bewirkt.

12. Drehmomentbegrenzer nach einem der Ansprüche 1 bis 11, dadurch gekennzeichnet, daß in der Buchse (25) axiale Schlitze (28, 29) angebracht sind, die abwechselnd von dem durchmessergrößeren Endbereich und von dem durchmesserkleineren Endbereich ausgehen.

## Claims

1. Torque limiter with automatic uncoupling and re-coupling between driving element (2, 22) and a driven element (4, 24) in which are included complementary components fitted to the driving element and associated with drive components (15, 45) fitted, so as to rotate, to the driven element (4, 24) and each of which is stressed by elasteic return means tending to bring it back to a position of coupling with an associated complementary component and is suitable for retracting by rotation when the resisting torque (Cr) on the driven element (4, 24) reaches a pre-determined value, in which each of the complementary components are suitable for engaging with the associated drive component driving element consists in a shell (2, 22) and the driven element in a hub (4, 24) fitted, so as to rotate, inside this shell (2, 22) coaxially with the latter, characterised in that the complementary components are formed by elastic elements (9, 39) projecting into the inside of the shell (2, 22) in that, in the coupled position, the pin of each drive component is displaced laterally in relation to the line which joins the centre of the surface of contact between the drive components (15, 45) and the associated complementary components, respectively (9, 39) in such a way as to create on each of these drive components (15, 45) a resisting torque opposed to the driving torque, and in that, in the coupled position, after each complementary component (9, 39) has passed the position in which the pin of the associated drive component (15, 45) is aligned with the above-mentioned line the resisting torque of the associated drive component led by the complementary component (9, 39) being in the same direction as the driving torque, so as to cause uncoupling of the shell (2, 22)-hub (4, 24) group.

2. Torque limiter according to Claim 1, characterised in that the complementary components (9, 39) are elastic elements projecting into the inside of the driving element and are suitable for compressing radially outwards inside the shell (2, 22) in order to absorb a temporary overload on the driven element (4, 24).

3. Torque limiter according to either Claim 1 or Claim 2, characterised in that each drive component (15) is stressed by a return spring (18) of the helical type encircling the pin of the drive component (15) tending to return it to a position of coupling with an associated complementary component (9).

4. Torque limiter according to Claim 3, characterised in that each complementary component is formed by a slide (11) which is displaceable radially inside the shell (2) and stressed radially inside the latter by at least one spring (14) such as a Belleville washer.

5. Torque limiter according to either Claim 1 or 2, characterised in that the drive components (45) are brought back together by means of at least one washer (44), and in that this washer (44) is connected by a return spring (49) to a drive washer (47) to which each drive component (45) is fitted so as to slide radially.

6. Torque limiter according to Claim 5, characterised in that each complementary component is formed by a leaf spring (39) fixed on the shell (22) and having a curved end (39b) suitable for operating with an associated drive component (45).

7. Torque limiter according to either Claim 5 or Claim 6, characterised in that a braking block (59) is fitted so as to slide axially in the cover (22b) of the shell (22) and in that this block (59) is prssed axially against the drive washer (47) by a leaf spring (60) fitted to this cover (22b).

8. Torque limiter according to one of Claims 5 to 7, characterised in that a freewheel spring (57) is lodged in a hole made in the hub (24), in that this spring (57) applies to the drive components (45) a force in the opposite direction to that of the return spring (49) when the rotation of the shell (22) is stopped, in such a way as to allow the hub (24) to rotate with a freewheel action.

9. Torque limiter according to any one of Claims 1 to 8, characterised in that there is an assembly sleeve (25) which is interchangeuble between the driven hub (24) and a driven splined shaft (5), in that on the outside, this sleeve (25) is of a conical shape complementing a conical bore in the hub (24) and, on the inside, has a cylindrical bore with splines (25a) complementing those of the shaft (5), and in that means are provided for tightening the sleeve (25) inside the hub (2) by conical locking.

10. Torque limiter according to Claim 9, characterised in that the means of tightening are formed by threaded axial half holes (32) made in the large diameter end of the hub (24) and by plain axial half holes (30) made in the corresponding end of the sleeve (25), these plain half holes (30) being shorter than the threaded half holes (32) and being suitable for registering with the latter to receive tightening screws in such a way that the tightening of these screws causes the displacement of the sleeve (25) inside the hub (24).

11. Torque limiter according to either Claim 8 or Claim 9 characterised in that, for loosening, there are plain axial half-holes (33) made at the large diameter end of the hub (24) and threaded axial half hole (31) made in the corresponding end of the sleeve (25), these plain half holes (33) being shorter than the threaded half holes (31) and being suitable for registering with the latter to receive screws, the tightening of these causing the displacement of the sleeve (25) outside the hub (24).

12. Torque limiter according to any one of Claims 1 to 11, characterised in that the sleeve (25) has axial slits (28, 29) extending alternately from the large diameter end and from the small diameter end.

FIG.1

FIG.2

EP 0 170 599 B1

FIG.4

FIG.3

FIG.5

FIG.6

# FIG.7

# FIG.8